# EUROPEAN PATENT SPECIFICATION

(11) **EP 1 069 336 B1**
(45) Date of publication and mention of the grant of the patent: **14.03.2007**
(21) Application number: 99830444.8
(22) Date of filing: 14.07.1999
(51) Int. Cl.: F16D 66/02

(54) **On-board apparatus for monitoring in real time the wear of vehicle brakes**
Gerät zur Darstellung des Fahrzeugbremsenverschleisses in Echtzeit
Appareil embarqué pour surveillance en temps réel de l'usure de freins de véhicules

(43) Date of publication of application: 17.01.2001
(73) Proprietor: Freni Brembo S.p.A., 24035 Curno (Bergamo) (IT)
(72) Inventor: Bonalumi, Alfio, 24018 Villa D'Almè (Bergamo) (IT); Zonca, Gianluca, 24040 Bottanuco (Bergamo) (IT)
(74) Representative: Crippa, Paolo Ernesto

(56) References cited:
- WO-A-97/35122
- DE-A- 4 212 279
- DE-A- 19 738 317
- DE-C- 3 348 387
- US-A- 3 808 593
- US-A- 5 848 672

## Description

The present invention relates to the sector of vehicle brakes in general and in particular to disc brakes.

As is known, the pads of friction material for vehicle brakes are subject to wear and must be replaced when their thickness falls below a minimum safety value.

Owing to the way in which the pads are mounted, in a position which is certainly not easy for inspection by the user, checking of their working condition is performed by specialized personnel only occasionally, with the risk that the check is performed when the thickness has already fallen below the minimum safety value.

Moreover, this problem becomes more critical in all those applications where braking occurs always - or nearly always - under extreme conditions, as for example during racing: not knowing precisely the exact state of wear of the pads may in this case have disastrous consequences.

In the light of the state of the art described, the object of the present invention is that of solving the problem of checking the state of wear of the pads of vehicle brakes in general.

Examples of apparatuses for monitoring the wear of brakes are disclosed in DE 197 38 317, US 5 848 672, DE 42 12 279, US 3 808 593 and DE 33 48 387.

In accordance with the present invention, this object is achieved by means of the apparatus defined in the accompanying claims.

The characteristic features and advantages of the present invention will become clear from the following detailed description of a possible practical embodiment thereof provided purely by way of a nonlimiting example illustrated in the accompanying drawings, in which:
Figure 1 is a functional-block diagram of the apparatus according to the present invention;
Figure 2 is a more detailed functional-block diagram of a circuit for conditioning a respective transducer of the apparatus according to Figure 1;
Figure 3 is a flow diagram of a procedure for setting operating and calibration parameters for the apparatus according to Figure 1;
Figure 4 is a flow diagram illustrating operation of the apparatus according to Figure 1;
Figure 5 is the graphic representation of the evolution, over time, of two electrical signals indicating in real time the state of wear of the brake pads of a vehicle equipped with the apparatus according to Figure 1;
Figure 6 is a partially sectioned plan view of a disc brake equipped with a transducer coupled to the apparatus according to the invention;
Figure 7 is a front view of the disc brake according to Figure 6;
Figure 8 is a detailed cross-sectional view of the zone of the brake according to Figure 6 where the transducer is mounted; and
Figure 9 is a detailed view of the transducer according to Figure 8.

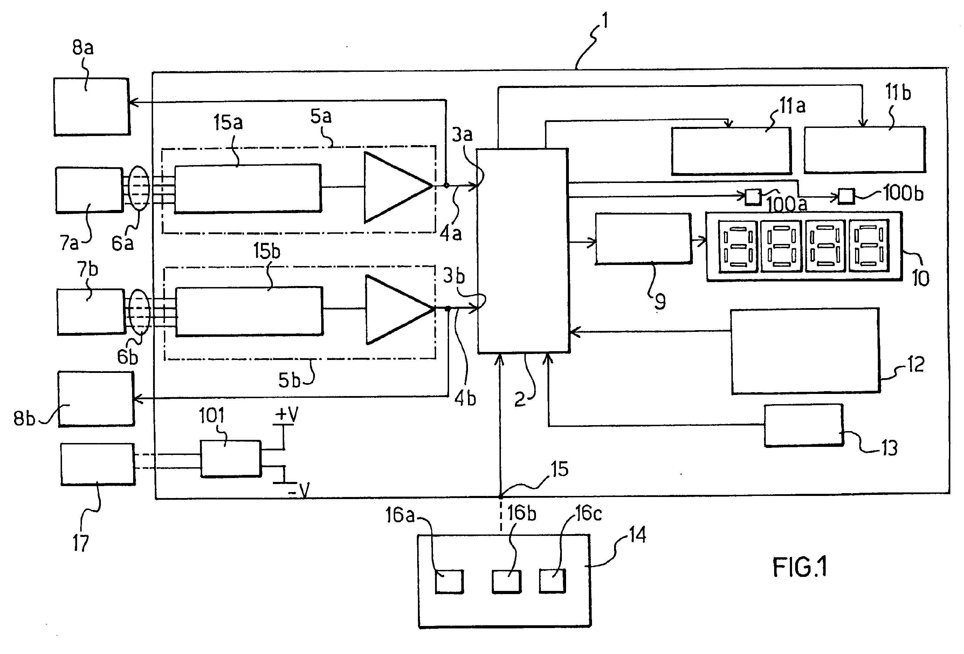

Figure 1 shows a functional-block diagram of the apparatus according to the present invention. 1 denotes in its entirety an electronic processing and display unit. Advantageously, the electronic unit 1 is intended to be housed in a suitably resistant box-shaped container to be installed on board a vehicle. The electronic unit 1 is designed so as to be able to operate also at high operating temperatures, including those higher than 50°C.

The electronic unit 1 comprises a microprocessor or microcomputer 2. The block 2 schematically shown in Figure 1 must be understood as comprising both the actual microprocessor and the volatile memories (RAM) and non-volatile memories (ROM, EPROM, EEPROM, Flash EEPROM) which are required, as is known, for the permanent storage of the microprogram which must be executed by the microprocessor, for storage of programmable parameters and for storage of temporary data during execution of the microprogram. A suitable microprocessor is for example L'87C196 manufactured by INTEL.

The block 2 has two (or more) inputs 3a, 3b which receive respective electrical signals 4a, 4b indicating in real time the state of wear of the pads of a braking system of a vehicle. The signals 4a, 4b are analog signals, and the inputs 3a, 3b are inputs of analog/digital converters inside the microprocessor 2, for example 10-bit converters. The signals 4a, 4b are generated by respective circuits 5a, 5b for conditioning and, if necessary, filtering and amplifying respective electrical signals 6a, 6b supplied by transducers 7a, 7b associated with the calipers of the braking system, so as to be able to detect directly or indirectly the degree of wear of the brake pads and supply a corresponding converted electrical signal. Each of the two series consisting of the transducer 7a, 7b, the respective circuitry 5a, 5b and the signal 4a, 4b is also called a "channel".

The electronic processing unit 1 has two outputs 8a, 8b for supplying the signals 4a, 4b to a telemetric detection unit, not shown since it is known per se.

The microprocessor 2 controls a circuit 9 for driving a display device 10 advantageously situated on the instrument panel of the vehicle so as to be directly visible for the driver. In the example shown, the display device is a group of four displays consisting of seven LED segments, designed to display four alphanumeric symbols, and the circuit 9 is a decoder of the type commonly used to drive these displays.

The microprocessor 2 also controls two alarm signalling devices 11a, 11b, for example two dual-coloured LEDs.

An input of the microprocessor 2 is connected to a device 12 for selection of the channel to be displayed on the display device 10, for example a switch. The microprocessor 2 controls two luminous indicators 100a, 100b, for example two mono-coloured LEDs, which indicate which of the two channels is currently displayed on the display 10.

An additional input of the microprocessor 2 is connected to a reset device 13, for example a push button.

A further additional input of the microprocessor 2 is connected to a port 15 for connection of an external programming device 14 which is portable or fixed and preferably provided with a data input device such as a keyboard (in the example, three keys 16a-16c) for programming the electronic unit 1 and in particular for setting the parameters necessary for operation, in accordance with the procedures which will be described in detail below.

A power supplier 17, for example the battery of the vehicle, supplies the power (for example 12 volts) to the processing unit 2. A DC/DC converter 101 generates, drawing on the supply voltage provided by the battery 17, two complementary voltages +V, -V (for example +15V and - 15V) to be supplied to the circuits 5a, 5b.

Advantageously the inputs for the signals 6a, 6b, the outputs for telemetry, and the inputs for the power supply are combined in a single connector.

The transducers 7a, 7b may be of various types. For example, they may consist of position transducers between the caliper body and pad of the brake, preferably position transducers of the contact type, for example LVDT transducers, and in this case the circuit arrangements 5a, 5b will comprise circuits 15a, 15b for conditioning of the transducers.

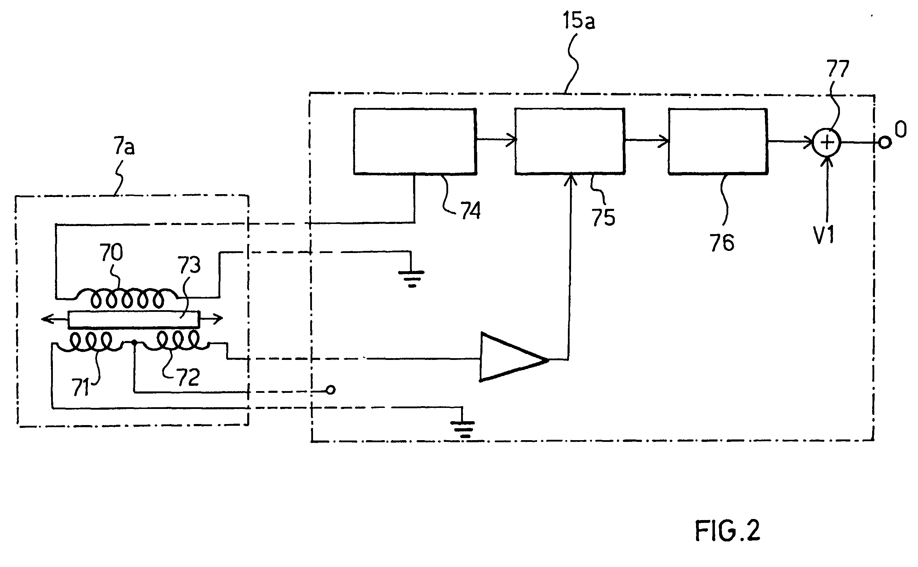

Figure 2 shows in greater detail one of the circuits 15a, 15b in Figure 1, in the case where the transducers are of the LVDT type, which can be electrically represented by means of a primary winding 70, two secondary windings 71, 72 and a moving core 73 and which therefore has five terminals.

The associated conditioning circuit 15a comprises an oscillator 74 which supplies a signal at 3000-4000 Hz to the primary winding 70 of the transducer 7a and to a demodulator 75; the demodulator 75 also receives the signal, duly amplified, of the secondary winding 72 of the transducer, the other secondary winding 71 being connected to earth. An output of the demodulator 75 supplies a low-pass filter 76 with a cutoff frequency of the order of a few hundreds of Hz. The output of the filter 76 supplies an adder 77 which also receives a voltage V1 for translating the output O.

The apparatus according to the present invention operates in the following manner.

During installation of new brake discs and/or pads on the vehicle, the processing unit 2 is reset by operating the reset device (for example, push button) 13. This causes reseting, by the microprocessor 2, of the display device 10. The reseting operation is performed individually for all the channels present, the selection of the channel to be reset being performed by means of the selection device 12.

The external programming device 14 is then connected to the port 15 of the processing unit 2. After connection has been performed, the keyboard 16a-16c of the programming device 14 is used to access a programming menu by means of which it is possible to set various parameters for calibration of the processing unit 2. The parameters which may be programmed by means of the external device 14 include, for example, the parameters for calibrating the electronic board, parameters relating to the real variation (travel) of the position transducer, parameters for filtering the signals supplied by the transducer in order to eliminate any disturbances of the analog signals 4a, 4b, or the number of decimal digits which must be shown on the display device 10. Furthermore, the device 14 is used to set the alarm threshold levels, namely the values for wear of the pads at which the alarm signalling devices 11a, 11b are activated. The alarm threshold levels are determined on the basis of the maximum possible wearing thickness of the friction material of the pads.

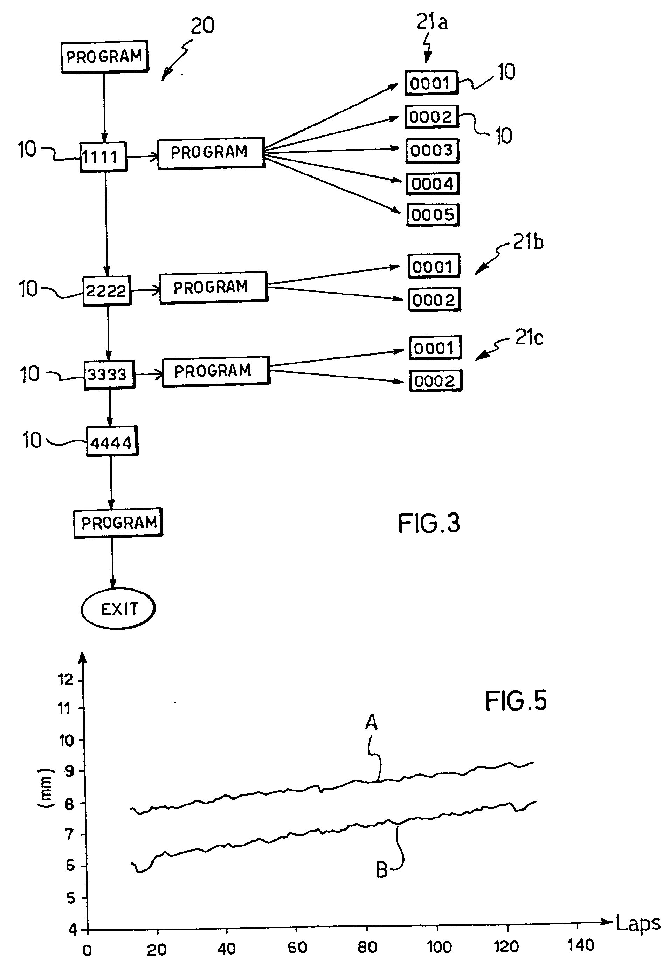

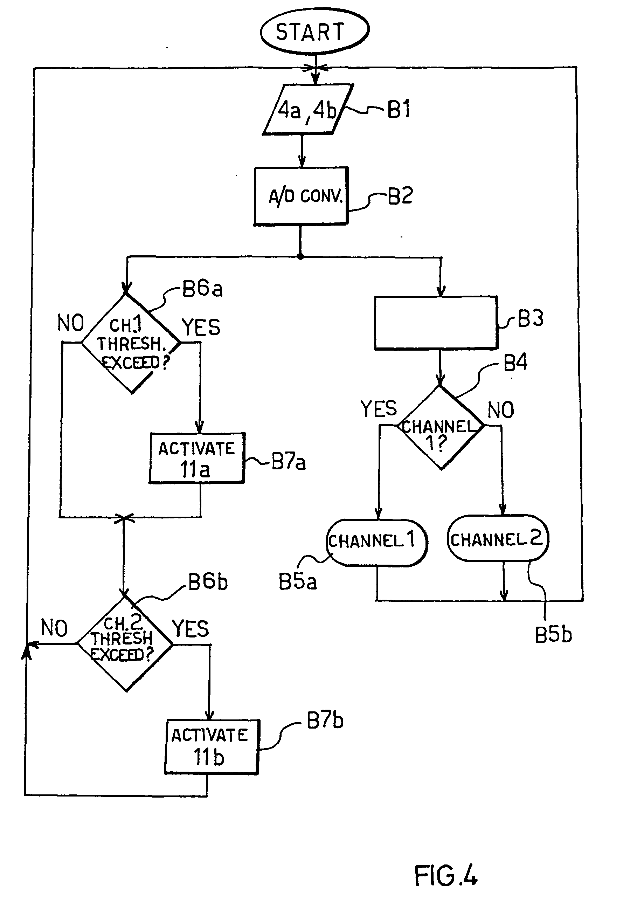

An example of the programming menu is shown schematically in Figure 3, in which 20 denotes the main menu composed of a plurality of pages from where it is possible to access secondary menus 21a-21c. After connecting the programming device 14 to the processing unit 1, in order to access the main menu 20 it is necessary to press one of the three keys 16a-16c of the device 14, for example the key 16a (which will be called "PROGRAM key"). The microprocessor 2 will cause the display, on the display device 10, of the four-digit code "1111" identifying the first menu page. By then pressing in succession either one of the remaining two keys 16b, 16c it is possible to run through the pages of the main menu 20 which will be displayed in succession on the display device 10 ("2222" = second page, "3333" = third page, "4444" = final page).

The page "1111" relates to calibration of the analog/digital converters, to calibration of the transducer travel and to setting of the number of decimal digits to be displayed. From this page, by pressing the PROGRAM key it is possible to access the secondary menu 21a, the pages "0001" and "0002" of which refer to calibration of the analog/digital converters, the pages "0003" and "0004" to calibration of the transducer travel, and the page "0005" to setting of the number of decimal digits to be shown.

The page "2222" relates to setting of the thresholds for the various channels. From this page, by pressing the PROGRAM key it is possible to access the secondary menu 21b which comprises (in the case of two channels illustrated) the pages "0001" and "0002" for setting the threshold of one channel or the other, respectively.

The page "3333" relates to setting of parameters for filtering of the signals supplied by the two channels. From this page, by pressing the PROGRAM key it is possible to access the secondary menu 21c comprising (still in the case of two channels) the pages "0001" and "0002" for setting the filtering parameters for both channels, respectively.

The page "4444" is the final page from where, by pressing the PROGRAM key, the programming procedure is exited.

For example, in order to set the alarm threshold levels, it is necessary to select page "2222" of the main menu and press the PROGRAM key in order to access the secondary menu 21b. Selection of the page of the secondary menu is performed by pressing the keys 16b, 16c. After selecting the page "0001" for example, by pressing the PROGRAM key it will be possible to modify the threshold value set. The currently set value is displayed on the display device 10 (for example, if "0200" is shown, this may mean that the limit set is 20.0 mm) and by pressing the keys 16b, 16c it is possible to modify this value. When the desired value has been reached, pressing the PROGRAM key stores the new value.

Figure 4 is a flow diagram illustrating operation of the processing unit 1.

During operation, the transducers 7a, 7b detect in real time and in a continuous manner the state of wear of the pads of the brakes with which they are associated, for example by means of the relative position between caliper body and pad during braking. By means of the conditioning, amplification and filtering series 5a, 5b, the signals produced by the transducers are supplied to the inputs 3a, 3b of the microprocessor 2 in the form of analog signals 4a, 4b (step B1). The signals 4a, 4b are also directly sent, via the respective outputs 8a, 8b, to a telemetric detection device which may, for example, provide a graphic representation thereof, as for example shown in Figure 5, in which the two graphs A and B illustrate the evolution, over time (in terms of the number of times a circuit is travelled around), of the signals 4a, 4b and provide an indication as to the wear (in mm) of the pads of a brake on the left-hand side (A) and on the right-hand side (B) of the vehicle.

The microprocessor 2, after sampling and quantifying the analog signals 4a, 4b in order to convert them into digital form (step B2), carries out processing of them designed firstly to allow a representation of the state of wear of -the pads in numerical format on the display device (step B3). Therefore when the channel to be displayed has been determined (step B4), the corresponding data is displayed on the display 10 (steps B5a, B5b). The choice of the channel to be displayed is performed by the driver who operates the channel selector 12. At the same time the microprocessor 2 performs a comparison of the wear value corresponding to the value of the signal 4a, 4b sampled and quantified (step B6a, B6b) in order to verify whether the previously set alarm threshold has been exceeded. Should this occur, the microprocessor 2 will activate the signalling device 11a, 11b corresponding to the channel for which the threshold value has been exceeded (for example, in the case of a dual-coloured LED, the colour will change from green to red), indicating to the user that the threshold has been exceeded (steps B7a, B7b).

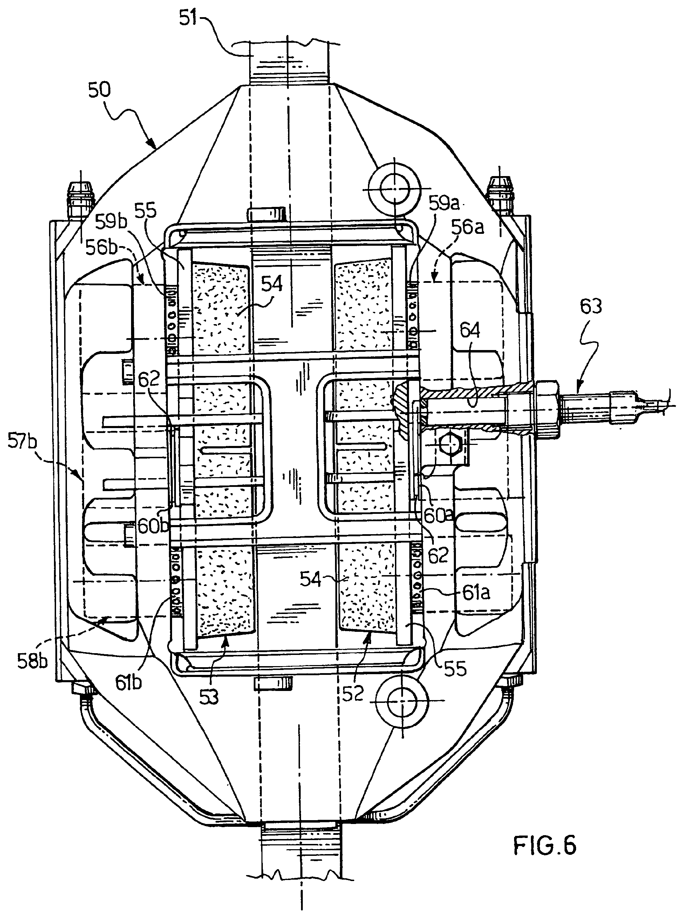

Although the apparatus according to the invention is not dependent upon the particular type of transducers used, provided that they consist of transducers designed to provide analog electrical signals indicating in real time the state of wear of the pads, Figure 6 shows a plan view of a disc brake, in particular for high-performance vehicles such as racing cars equipped with a particularly advantageous transducer and particularly suitable for use with the apparatus according to the present invention.

A caliper body 50 straddling a respective disc 51 supports in respective seats two opposing pads 52, 53, each of which is composed in a known manner of a lining 54 which faces the disc 51 and consists of material with a high coefficient of friction and is supported by a plate 55.

In the example shown, three hydraulic cylinder/piston groups 56a-58a, 56b-58b, which can be activated so as to thrust the respective pad 52, 53 against the disc 51, are formed in both sides of the caliper body 50 with respect the disc 51. A radiator 59a-61a, 59b-61b, in contact with the plate 55 of the respective pad, is mounted in a known manner on the end of each piston. The radiator 59a, 61a, 59b, 61b of the pistons at the ends is provided with holes. The radiator 60a, 60b of the central pistons has a circumferential groove 62.

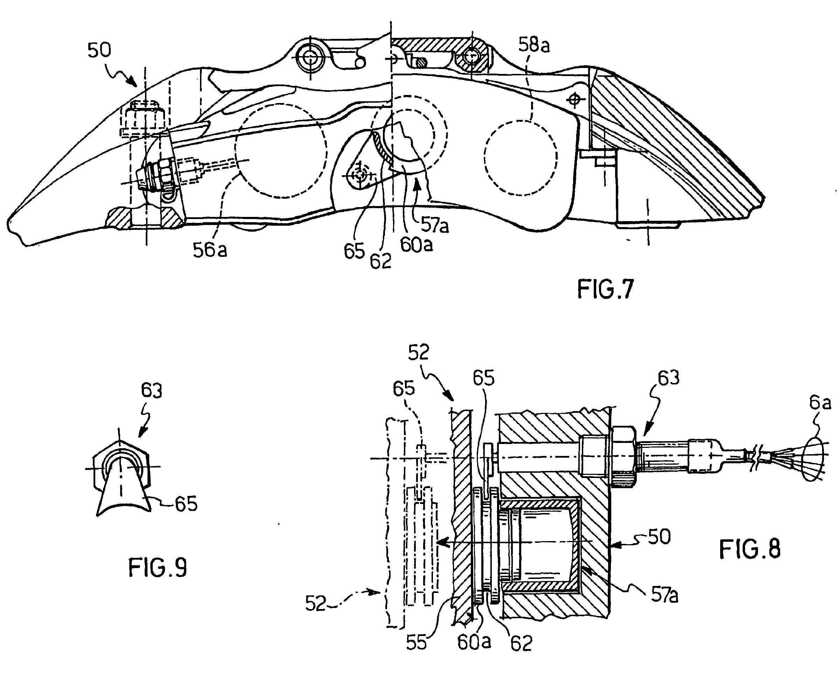

One of the two central pistons, in the example the one on the inner side of the caliper body 50, has associated with it a relative position transducer 63, of the contact type and in particular of the type known as LVDT, with a fixed part attached to the caliper body and inserted by means of screwing into a hole 64 passing alongside the cylinder/piston 57a. With reference also to Figures 7-9, a fork member 65 is mounted on the free end of the movable element of the transducer 63. The fork member 65 engages with the groove 62 on the radiator 60a of the piston.

During use, the plates 55 of the pads 52, 53 are constantly in contact with the radiators of the pistons. Before braking, the pistons 56a-58a and 56b-58b are axially extended with respect to the caliper body 50 by a given amount. The position of the piston 57a with respect to the caliper body 50 is converted by the transducer 63 into an electrical signal. During braking, the piston 57a is actuated and moves forward in the direction of the arrow shown in Figure 8, so as to bias, together with the other pistons 56a and 58a, the pad 52 against the surface of the disc 51; at the same time, the pistons 56b-58b are activated so as to bias the opposite pad 53 against the disc 51. During braking, the linings of the pads are subject to wear and their thickness decreases. At the end of braking, the piston 57a, together with the pistons 56a, 58a, 56b-58b retracts, but does not return into the rest position prior to braking, remaining more extended with respect to the position prior to braking by an amount corresponding to the reduced thickness of the pad linings. The axial variation in position of the piston 57a with respect to the caliper body results in a corresponding variation in extension of the movable element of the transducer 63 and hence in a variation in the electrical signal converted. The processing unit 2 is thus able to determine the variation in relative position of the piston with respect to the caliper body before and after braking and hence the degree of wear of the pad. In this way the transducer 63 provides an indication in real time as to the degree of wear of the pads.

The apparatus according to the present invention has the advantage of monitoring and providing the driver of the vehicle, continuously and in real time during travel, with information regarding the state of wear of the brake pads of the vehicle. This is of particular importance in specific applications, for example during racing, where braking is always or nearly always performed in extreme conditions, since the driver will be constantly informed of the conditions of the braking system.

The presence of alarm signalling devices provides an additional degree of safety, immediately attracting the driver's attention in the event of pad wear exceeding a maximum predefined value, so that the driver is able to replace the pads as soon as possible. The risk of travelling with worn pads, which is instead present in the case of impromptu checks, is thus avoided.

The apparatus according to the invention may be used with transducers of various types, provided that they provide an electrical signal in real time indicating the state of wear of the pad.

However, the particular type of transducer described above, owing to the manner in which it is associated with the brake, detects the travel of the piston actuating the pad during braking and thus provides a substantially direct measurement of the degree of wear of the pad.

This transducer, although it is particularly suitable for use with the apparatus according to the invention, may therefore be applied also to apparatuses of different types, whenever it is required to obtain a substantially direct measurement of the degree of wear of the pad.

Although the above description has been provided with reference to the example of a high-performance brake, with three hydraulic cylinder/piston groups for actuation of each of the two pads, it is obvious that the transducer 63 may also be applied to different disc brakes, with a single cylinder/piston group for each pad.

The number of measuring channels of the apparatus according to the invention, or the number of transducers, may vary depending on the application. For example, it is possible to have two channels, with a transducer associated with one of the brake pads of a front wheel and a second transducer associated with one of the brake pads of one of the rear wheels. Alternatively, for a more complete measurement, it is possible to have four channels, with transducers associated with one of the calipers of each wheel. For an even more complete check as to the state of wear of all the pads of the braking system, it is possible to have two transducers for each brake, associated with the two opposing pads thereof.

It is obvious that further variations and/or additions to that described and illustrated above may be provided, without thereby departing from the scope of protection of the invention defined in the claims.

## Claims

1. Device for detecting the degree of wear of a pad (52, 53) of a vehicle disc brake, wherein it comprises a relative position transducer (63) having a fixed body attached to a caliper body (50) of the brake and a movable element which is displaced by a piston (57a) for actuating, during braking, the pad, so as to be able to detect the relative position of the piston with respect to the caliper body,
**characterized in that** said movable element is provided with engaging means having a fork member (65) mounted on the free end of the movable element of the transducer (63), said fork member (65) engaging a groove (62) provided on a radiator (60a) of said actuating piston.

2. Device according to Claim 1, wherein said relative position transducer is of the LVDT type.

3. Device according to Claim 1, wherein said transducer is housed in a seat formed in said caliper body alongside said piston.

4. On-board apparatus for monitoring the degree of wear of pads (52, 53) of vehicle disc brakes, wherein it comprises:
a device for detecting the degree of wear of a pad of a vehicle disc brake as defined in Claim 1 and having a transducer means (63) designed to detect in real time the current degree of wear of at least one pad (52) and generate a respective electrical signal depending on the current degree of wear;
on-board electronic processing means (1) designed to receive said electrical signal and process it so as to obtain a measurement of the current degree of wear;
on-board display means (10) controlled by the processing means and designed to provide the vehicle driver in real time with said measurement of the current degree of wear.

5. Apparatus according to Claim 4, wherein said processing means comprise a programmable processing unit.

6. Apparatus according to Claim 4 or 5, wherein said display means comprise an alphanumeric display device controlled by said programmable processing unit.

7. Apparatus according to Claim 4, 5 or 6, wherein it comprises at least one on-board alarm signalling device and in that said electronic processing means perform a comparison between said measurement of the current degree of wear and a preset safety value, activating said alarm signalling device in the event of said safety value being exceeded.

8. Apparatus according to any one of the preceding claims 4 - 7, wherein said programmable processing unit comprises an input port for connection to a remote programming device.

9. Apparatus according to any one of the preceding claims 4 - 8, wherein said transducer means are relative position transducer means which are sensitive to the relative displacement of the pad with respect to the caliper body during braking.

10. Apparatus according to Claim 9, wherein said transducer means are of the contact type, in particular comprising an LVDT transducer which is attached to a caliper body of the brake, with a movable element displaced by a piston for actuation of the pad, so as to be able to detect the relative position of the piston with respect to the caliper body.

11. Apparatus according to Claim 10, wherein said movable element of the transducer is provided with an engaging element which engages with a respective seat in a radiator of said actuating piston.

12. Apparatus according to Claim 11, wherein said engaging element is a fork member which is fixed substantially to a free end of the movable part, and said seat is a groove in said radiator.

13. Apparatus according to Claim 12, wherein it comprises circuitry means for conditioning the signal generated by said transducer.

14. Apparatus according to any one of the preceding claims 4 - 13, wherein it comprises a plurality of channels for a respective plurality of transducer means, each of said transducer means being associated with a respective pad of one of more brakes of the vehicle braking system.

15. Method for monitoring the degree of wear of pads of vehicle brakes in general, wherein it envisages generating an electrical signal depending on the current degree of wear of a respective pad actuated by a piston, processing of said electrical signal so as to obtain a measurement of the current degree of wear, and displaying, in real time, to the driver on board the vehicle said measurement of the current degree of wear, **characterised in that** said electrical signal is generated measuring said piston movement through engaging means having a fork member (65) mounted on the free end of the movable element of the transducer (63), said fork member (65) engaging a groove (62) provided on a radiator (60a) of said actuating piston.

16. Method according to Claim 15, wherein it also envisages a comparison of said measurement with a preset safety value and, in the case of the safety value being exceeded, signalling of an alarm to the driver.

## Patentansprüche

1. Vorrichtung zur Erfassung des Abnutzungsgrads eines Bremsbelags (52, 53) einer Fahrzeug-Scheibenbremse, umfassend einen Messwertaufnehmer (63) für die relative Position, der einen an einem Sattelkörper (50) der Bremse angebrachten feststehenden Körper und ein bewegliches Element aufweist, das durch einen Kolben (57a) für die Betätigung des Bremsbelags während des Bremsens bewegt wird, um die relative Position des Kolbens bezüglich des Sattelkörpers erfassen zu können,
**dadurch gekennzeichnet, dass** das bewegliche Element mit Eingriffsmitteln versehen ist, die ein an dem freien Ende des beweglichen Elements des Messwertaufnehmers (63) montiertes Gabelelement (65) aufweisen, wobei das Gabelelement (65) in eine an einem Kühler (60a) des Betätigungskolbens vorgesehene Nut (62) eingreift.

2. Vorrichtung nach Anspruch 1, wobei der Messwertaufnehmer für die relative Position dem LVDT-Typ entspricht.

3. Vorrichtung nach Anspruch 1, wobei der Messwertaufnehmer in einem Sitz untergebracht ist, der in dem Sattelkörper längsseits des Kolbens gebildet ist.

4. On-Board-Vorrichtung zur Überwachung des Abnutzungsgrads von Bremsbelägen (52, 53) von Fahrzeug-Scheibenbremsen, umfassend:
- eine Vorrichtung zur Erfassung des Abnutzungsgrads eines Bremsbelags einer Fahrzeug-Scheibenbremse wie in Anspruch 1 definiert und mit
- einem Messwertaufnehmermittel (63), das ausgelegt ist für die Echtzeit-Erfassung des aktuellen Abnutzungsgrads von zumindest einem Bremsbelag (52) und für die Erzeugung eines jeweiligen elektrischen Signals abhängig von dem aktuellen Abnutzungsgrad;
- elektronische On-Board-Verarbeitungsmittel (1), die ausgelegt sind für den Empfang des elektrischen Signals und für seine Verarbeitung, um eine Messung des aktuellen Abnutzungsgrads zu erhalten;
- On-Board-Anzeigemittel (10), die durch die Verarbeitungsmittel gesteuert werden und die ausgelegt sind, dem Fahrer des Fahrzeugs die Messung des aktuellen Abnutzungsgrads in Echtzeit zu liefern.

5. Vorrichtung nach Anspruch 4, wobei die Verarbeitungsmittel eine programmierbare Verarbeitungseinheit umfassen.

6. Vorrichtung nach Anspruch 4 oder 5, wobei die Anzeigemittel eine durch die programmierbare Verarbeitungseinheit gesteuerte alphanumerische Anzeigevorrichtung umfassen.

7. Vorrichtung nach Anspruch 4, 5 oder 6, umfassend zumindest eine On-Board-Alarmmeldevorrichtung, wobei die elektronischen Verarbeitungsmittel einen Vergleich zwischen der Messung des aktuellen Abnutzungsgrads und einem voreingestellten Sicherheitswert durchführen und die Alarmmeldevorrichtung im Falle des Überschreitens des Sicherheitswerts aktivieren.

8. Vorrichtung nach einem der vorhergehenden Ansprüche 4 bis 7, wobei die programmierbare Verarbeitungseinheit einen Eingabeanschluss für die Verbindung mit einer Femprogrammierungsvorrichtung umfasst.

9. Vorrichtung nach einem der vorhergehenden Ansprüche 4 bis 8, wobei die Messwertaufnehmermittel Messwertaufnehmermittel für die relative Position sind, die empfindlich sind für die relative Bewegung des Bremsbelags bezüglich des Sattelkörpers während des Bremsens.

10. Vorrichtung gemäß Anspruch 9, wobei die Messwertaufnehmermittel dem Kontakttyp entsprechen und insbesondere einen LVDT-Messwertaufnehmer umfassen, der an einem Sattelkörper der Bremse angebracht ist, mit einem beweglichen Element, das durch einen Kolben für die Betätigung des Bremsbelags bewegt wird, um die relative Position des Kolbens bezüglich des Sattelkörpers zu erfassen.

11. Vorrichtung nach Anspruch 10, wobei das bewegliche Element des Messwertaufnehmers mit einem Eingriffselement versehen ist, das in einen jeweiligen Sitz in einem Kühler des Betätigungskolbens eingreift.

12. Vorrichtung nach Anspruch 11, wobei das Eingriffselement ein Gabelelement ist, das im wesentlichen an einem freien Ende des beweglichen Teils befestigt ist, und wobei der Sitz eine Nut in dem Kühler ist.

13. Vorrichtung nach Anspruch 12, umfassend eine Schaltungseinrichtung für die Konditionierung des von dem Messwertaufnehmer erzeugten Signals.

14. Vorrichtung nach einem der vorhergehenden Ansprüche 4 bis 13, umfassend eine Mehrzahl von Kanälen für eine betreffende Mehrzahl von Messwertaufnehmermitteln, deren jedes einem betreffenden Bremsbelag einer oder mehrerer Bremsen des Fahrzeugbremssystems zugeordnet ist.

15. Verfahren zur Überwachung des Abnutzungsgrads von Belägen von Fahrzeugbremsen im allgemeinen, umfassend die Erzeugung eines elektrischen Signals abhängig von dem aktuellen Abnutzungsgrad eines durch einen Kolben betätigten betreffenden Bremsbelags, die Verarbeitung des elektrischen Signals, um eine Messung des aktuellen Abnutzungsgrads zu erhalten, und die Echtzeit-Anzeige der Messung des aktuellen Abnutzungsgrads für den Fahrer an Bord des Fahrzeugs, **dadurch gekennzeichnet, dass** das elektrische Signal erzeugt wird, indem die Kolbenbewegung durch Eingriffsmittel gemessen wird, die ein an dem freien Ende des beweglichen Elements des Messwertaufnehmers (63) montiertes Gabelelement (65) aufweisen, welches in eine Nut (62) eingreift, die an einem Kühler (60a) des Betätigungskolbens vorgesehen ist.

16. Verfahren nach Anspruch 15, bei welchem auch ein Vergleich der Messung mit einem voreingestellten Sicherheitswert und die Meldung eines Alarms an den Fahrer im Falle des Überschreitens des Sicherheitswerts vorstellbar sind.

## Revendications

1. Dispositif pour détecter le degré d'usure d'une plaquette (52, 53) d'un frein à disque de véhicule, comprenant un transducteur (63) de position relative comportant un corps fixe assujetti à un corps (50) d'étrier du frein et un élément mobile qui est décalé par un piston (57a) pour actionner la plaquette pendant le freinage de façon à pouvoir détecter la position relative du piston par rapport au corps d'étrier,
**caractérisé en ce que** ledit élément mobile est pourvu d'un moyen d'engagement comportant un élément (65) de fourche monté sur l'extrémité libre de l'élément mobile du transducteur (63), ledit élément (65) de fourche engageant une rainure (62) réalisée sur un radiateur (60a) dudit piston d'actionnement.

2. Dispositif selon la revendication 1, dans lequel ledit transducteur de position relative est du type LVDT.

3. Dispositif selon la revendication 1, dans lequel ledit transducteur est logé dans un logement formé dans ledit corps d'étrier le long dudit piston.

4. Appareil embarqué pour surveiller le degré d'usure de plaquettes (52, 53) de freins à disque de véhicule, comprenant:
un dispositif permettant de détecter le degré d'usure d'une plaquette d'un frein à disque de véhicule selon la revendication 1 et comportant un moyen (63) formant transducteur conçu pour détecter, en temps réel, le degré d'usure en cours d'au moins une plaquette (52) et pour produire un signal électrique respectif en fonction du degré d'usure en cours ;
des moyens embarqués (1) de traitement électronique conçus pour recevoir ledit signal électrique et le traiter de façon à obtenir une mesure du degré d'usure en cours ;
des moyens embarqués (10) d'affichage commandés par les moyens de traitement et conçus pour indiquer en temps réel, au conducteur de véhicule, ladite mesure du degré d'usure en cours.

5. Appareil selon la revendication 4, dans lequel lesdits moyens de traitement comprennent une unité de traitement programmable.

6. Appareil selon la revendication 4 ou la revendication 5, dans lequel lesdits moyens d'affichage comprennent un dispositif d'affichage alphanumérique commandé par ladite unité de traitement programmable.

7. Appareil selon la revendication 4, 5 ou 6, comprenant au moins un dispositif embarqué d'émission d'alarme, et dans lequel lesdits moyens de traitement électronique effectuent une comparaison entre ladite mesure du degré d'usure en cours et une valeur de sécurité prédéterminée, en activant ledit dispositif d'émission d'alarme dans l'éventualité d'un dépassement de ladite valeur de sécurité.

8. Appareil selon l'une quelconque des revendications précédentes 4 à 7, dans lequel ladite unité de traitement programmable comprend un accès d'entrée pour connexion à un dispositif de programmation à distance.

9. Appareil selon l'une quelconque des revendications précédentes 4 à 8, dans lequel lesdits moyens formant transducteur sont des moyens formant transducteur de position relative qui sont sensibles au décalage relatif de la plaquette par rapport au corps d'étrier pendant le freinage.

10. Appareil selon la revendication 9, dans lequel lesdits moyens formant transducteur sont de type à contact, comprenant en particulier un transducteur LVDT qui est assujetti à un corps d'étrier du frein, un élément mobile étant décalé par un piston pour actionnement de la plaquette, de façon à pouvoir détecter la position relative du piston par rapport au corps d'étrier.

11. Appareil selon la revendication 10, dans lequel ledit élément mobile du transducteur est pourvu d'un élément d'engagement qui engage un logement respectif réalisé dans un radiateur dudit piston d'actionnement.

12. Appareil selon la revendication 11, dans lequel ledit élément d'engagement est un élément de fourche qui est fixé sensiblement à une extrémité libre de la partie mobile, et ledit logement est une rainure réalisée dans ledit radiateur.

13. Appareil selon la revendication 12, comprenant des moyens formant circuit destinés à conditionner le signal produit par ledit transducteur.

14. Appareil selon l'une quelconque des revendications précédentes 4 à 13, comprenant une pluralité de canaux destinés à une pluralité de moyens formant transducteur respectifs, chacun desdits moyens formant transducteur étant associé avec une plaquette respective d'un ou de plusieurs freins du système de freinage de véhicule.

15. Procédé pour surveiller globalement le degré d'usure de plaquettes de freins de véhicule, dans lequel il est envisagé de produire un signal électrique en fonction du degré d'usure en cours d'une plaquette respective actionnée par un piston, de traiter ledit signal électrique de façon à obtenir une mesure du degré d'usure en cours, et d'afficher en temps réel, pour le conducteur qui se trouve à bord du véhicule, ladite mesure du degré d'usure en cours, **caractérisé en ce que** ledit signal électrique est produit en mesurant ledit mouvement de piston par ledit moyen d'engagement comportant un élément (65) de fourche monté sur l'extrémité libre de l'élément mobile du transducteur (63), ledit élément (65) de fourche engageant une rainure (62) réalisée sur un radiateur (60a) dudit piston d'actionnement.

16. Procédé selon la revendication 15, dans lequel il est également envisagé d'effectuer une comparaison de ladite mesure avec une valeur de sécurité prédéterminée et, dans le cas d'un dépassement de la valeur de sécurité, d'émettre une alarme à destination du conducteur.
